(19) Europäisches Patentamt
European Patent Office
Office européen des brevets

(11) Publication number: **0 446 830 A2**

(12) **EUROPEAN PATENT APPLICATION**

(21) Application number: **91103679.6**

(51) Int. Cl.[5]: **C09D 183/00**, C09D 133/04

(22) Date of filing: **11.03.91**

(30) Priority: **12.03.90 US 491791**

(43) Date of publication of application:
**18.09.91 Bulletin 91/38**

(84) Designated Contracting States:
**DE FR GB**

(71) Applicant: **DOW CORNING CORPORATION**
**P.O. Box 1767**
**Midland Michigan 48686-0994(US)**

(72) Inventor: **Larson, Kent Robert**
**3077 East Stewart**
**Midland, Michigan(US)**

(74) Representative: **Spott, Gottfried, Dr. et al**
**Spott Weinmiller & Partner**
**Sendlinger-Tor-Platz 11**
**W-8000 München 2(DE)**

(54) **Primer compositions exhibiting heat resistant bonding.**

(57) Improved primer compositions comprise A) at least one member of a specified group of ethylenically unsaturated organosilicon compounds containing silicon-bonded alkoxy groups, B) silicone/organic copolymers prepared from esters of ethylenically unsaturated organic acids and organosilicon compounds derived from these acids, C) organohydrogensiloxane curing agents and D) a solvent. The improvement resides in the presence in the primer composition of an organic peroxide in an amount sufficient to retain the bonding properties of the primer composition at temperatures of at least 100° C.

The solvent portion of the primer composition preferably comprises at least 50 percent by weight of an ethylenically unsaturated alcohol containing from 4 to 6 carbon atoms.

EP 0 446 830 A2

This invention relates to primer compositions. More particularly, this invention relates to primer compositions capable of achieving cohesive bonding between organosiloxane elastomers and organic polymers and retaining this bonding at temperatures of 100° C. and above. The primers are particularly useful for preparing optically transparent laminates comprising layers of thermoplastic organic polymers bonded by a cured organosiloxane elastomer. These laminates can be used as windows and windshields in vehicles and aircraft.

Organosilicon compounds useful for bonding organosiloxane elastomers to various substrates are disclosed in U.S. Patent No. 4,719,262, issued to Edwin Plueddemann on January 12, 1988. The organosilicon compound is a silane or bis-silylalkane containing at least two silicon-bonded alkoxy groups per molecule in addition to at least one substituent that is bonded to silicon through oxygen and contains at least four carbon atoms, two of which form a terminal group of the formula $CH_2=CH$-. A preferred group of these organosilicon compounds include reaction products of 1) an alkoxy-substituted disilylalkane such as 1,2-bis-(trimethoxysilyl)ethane and 2) a monoether or diether derived from a) an alkyl polyol such as ethylene glycol, propylene glycol, glycerol or 1,1,1-trimethylolpropane and b) an ethylenically unsaturated alcohol such as allyl alcohol.

If one of the substrates to be bonded is an amorphous, glassy organic polymer such as polystyrene or an ester of acrylic or methacrylic acid, in addition to at least one of the aforementioned organosilicon compounds the primer composition also contains 1) a silicone/organic copolymer derived from (a) at least one ethylenically unsaturated organic monomer such as styrene and esters of methacrylic acid or acrylic acid and (b) a silane containing three hydrolyzable groups bonded to silicon and one silicon bonded hydrocarbon or substituted hydrocarbon radical containing a terminal $CH_2=CH$- radical, 2) an organohydrogensiloxane containing an average of at least three silicon bonded hydrogen atoms per molecule and 3) a solvent capable of dissolving all of the remaining ingredients in the composition.

United States Patent No. 4,795,775, which issued to M. Baile, J. Braun and J. Clark on January 3, 1989 teaches using ethylenically unsaturated aliphatic alcohols containing 4, 5 or 6 carbon atoms as solvents for the primer compositions described in the aforementioned patent to Plueddemann.

A shortcoming of the primer compositions described in the aforementioned patents to Plueddemann and to Baile et al. is a reduction of bonding properties at temperatures above about 100° C.

An objective of this invention is to modify the primer compositions disclosed in the aforementioned patents to Plueddemann and Baile et al. by improving the ability of these compositions to retain their excellent bonding properties at temperatures of 100° C. and above.

The present invention is based on the discovery that the addition of an organic peroxide substantially improves the ability of certain primer compositions to retain their bonding ability at elevated temperatures. The primer compositions comprise 1) an ethylenically unsaturated disilylalkane, 2) a reaction product of an ester of an ethylenically unsaturated carboxylic acid and an alkoxysilyl derivative of an ethylenically unsaturated carboxylic acid, and 3) an organohydrogensiloxane. The compositions optionally contain a catalyst to facilitate hydrolysis/condensation of the primer composition in the presence of atmospheric moisture.

This invention provides an improved primer composition comprising

A. an organosilicon compound of the formula $(R^1O)_n(R^2O)_{(3-n)}SiR^3Si(OR^1)_r(OR^2)_{(3-r)}$, where $R^1$ represents $CH_2=CHR^4OR^5$-; $R^2$ represents an alkyl radical containing from 1 to 4 carbon atoms; $R^3$ represents an alkylene radical containing at least two carbon atoms, $R^4$ represents an alkylene radical; $R^5$ represents an alkylene or substituted alkylene radical, where $R^5$ contains at least two carbon atoms and the substituent is a hydroxyl, alkoxy or $CH_2=CHR^4O$-group, n is 1 or 2 and r is 0 or 1;

B. a copolymer derived from 1) at least one ester of an ethylenically unsaturated aliphatic carboxylic acid and 2) at least one silane of the formula $R^7COOR^6SiX_3$ where $R^6$ represents an alkylene radical, $R^7$ represents a terminally unsaturated alkenyl radical and X represents a hydrolyzable group;

C. an organohydrogensiloxane containing an average of at least two silicon-bonded hydrogen atoms per molecule; and

D. an amount of solvent sufficient to dissolve said composition;

The improvement comprises the presence in said composition of

E. an amount of an organic peroxide sufficient to retain the cohesive bonding properties of said composition at temperatures of at least 100° C.

The concentration of peroxide is preferably from 1 to about 10 weight percent, based on the weight of said composition and the peroxide should have a half life at 100° C. of at least 30 minutes.

The solvent portion of the present composition preferably contains at least at least 50 weight percent, based on the weight of said solvent, of an ethylenically unsaturated alcohol containing 4, 5 or 6 carbon atoms.

The individual ingredients of the primer composition will now be discussed in detail.

The feature that distinguishes the present compositions from those of the prior art, particularly the aforementioned patents to Plueddemann and Baile et al., is the presence of an organic peroxide for the purpose of maintaining at elevated temperatures the ability of the primer composition to cohesively bond a layer of an elastomeric polyorganosiloxane to an organic polymer or glass substrate. In preferred applications the polyorganosiloxane layer is used to cohesively bond two of these substrates to form a transparent laminate.

Any of the known organic peroxides having a half life longer than about 30 minutes at 100 °C. can be used in the present compositions. The percentage of bond strength exhibited at 25 °C. that is retained at temperatures of 100 °C. and above has been shown to be dependent, at least in part, on the type of peroxide used.

Suitable organic peroxides include but are not limited to benzoyl peroxide, 2,4-dichlorobenzoyl peroxide, di-t-butyl peroxide, dicumyl peroxide, 2,5-bis(t-butylperoxy-2,5-dimethylhexane) and 1,1-di(t-butylperoxy)-3,3,5-trimethylcyclohexane.

Using the preferred substrates and elastomeric organosiloxane composition described in the accompanying examples the preferred peroxide is t-butylperoxyisopropyl carbonate, based on the ability of the resultant composites to retain a substantial level of bond strength at 150 °C.

A convenient method for determining bond strength is measuring the amount of force required to peel the cured organosiloxane elastomer from a rigid organic substrate, such as a sheet of polycarbonate or polymethylmethacrylate, to which a coating of the primer to be evaluated has been applied. Typically the coating of primer is allowed to dry before the curable organosiloxane elastomer composition is applied and cured. In accordance with test procedure D-903 of the American Society of Testing and Materials (ASTM), a recognized method for measuring peel strength, metal screening is embedded in the uncured elastomer layer to provide a medium through which large amounts of force acting to peel the cured elastomer layer from the substrate can be applied without tearing or rupturing the elastomer.

The ethylenically unsaturated organosilicon compound, referred to hereinafter as ingredient A of the present primer compositions, is a bis-silylalkane represented by the general formula

$$(R^1O)_n(R^2O)_{(3-n)}SiR^3Si(OR^1)_r(OR^2)_{3-r}.$$

The alkoxy groups represented by $-OR^2$ contain from 1 to 4 carbon atoms and are preferably methoxy or ethoxy, $\underline{n}$ is 1 or 2 and r is 0 or 1. $R^1$ represents the residue remaining following removal of a hydroxyl group from a partially etherified aliphatic diol or triol. The unetherified diol or triol, represented by the formula $HOR^5OH$, contains at least two carbon atoms. At least one of the etherifying groups corresponds to the formula $CH_2=CHR^4O-$.$R^4$ represents an alkylene radical and $R^5$ represents an alkylene radical that is either unsubstituted when the etherified compound is a diol or is substituted with a second $CH_2=CHR^4O-$ group, an alkoxy group or a hydroxyl group when the etherified compound is a triol. The alkylene radicals represented by $R^4$ and $R^5$ can be linear or branched.

Preferred terminally unsaturated etherifying groups, represented by $CH_2=CHR^4O-$, contain from 3 to 6 carbon atoms and include but are not limited to allyloxy and 3-butenoxy. Most preferably $R^4$ represents methylene and the etherifying group is allyl. Suitable diols and triols, represented by $HOR^5OH$, include but are not limited to ethylene glycol, the isomeric propanediols, 1,4-butanediol, glycerol and 1,1,1,- trimethylolpropane. In a preferred embodiments of ingredient A $R^5$ represents ethylene, propylene, 1,4 butylene or

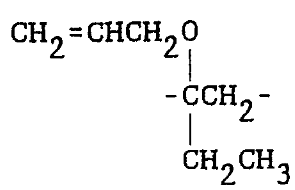 ;

$R^2$ represents an alkyl radical containing from 1 to 4 carbon atoms. It should be evident from the values assigned to $\underline{n}$ and $\underline{r}$ that ingredient A contains a minimum of 3 alkoxy groups per molecule.

Ingredient A can be prepared by reacting one or more of the aforementioned partially etherified aliphatic diols and/or triols with a bis-(trialkoxysilyl)alkane. The etherified diol or triol contains at least one unreacted hydroxyl group and the molar ratio of total diol and/or triol to organosilicon compound in the reaction mixture is from 1 to about 3, depending upon the desired values for $\underline{n}$ and $\underline{r}$ in the foregoing

formula. The reaction is conducted under conditions that are typical for condensation reactions involving alkoxysilanes and hydroxylated organic compounds. These conditions typically include an anhydrous atmosphere such as nitrogen, temperatures from ambient to 200 °C. and a catalyst.

Useful catalysts for preparing ingredient A include but are not limited to organic amines, tin compounds and titanium compounds. Preferred catalysts include stannous octoate, dibutyltin dilaurate and titanium compounds such as tetrabutyl titanate, $Ti(OC_4H_9)_4$.

The catalyst must be at least partially soluble in the reaction mixture and typically constitutes from about 0.1 to about 5 percent of the combined weight of all reactants.

When conducted under neutral or acidic conditions reactions involving replacement of silicon-bonded alkoxy groups generate the alcohol corresponding to the alkoxide group as a by-product. These reactions are often reversible and it is therefore generally desirable to remove this by-product alcohol by distillation as the reaction progresses. The course of the reaction can then be readily followed by measuring the amount of alcohol collected. Because methanol and ethanol are the lowest boiling alcohols, the alkoxy groups of the present organosilicon reactants, represented by $-OR^2$ in the foregoing formulae, are preferably methoxy or ethoxy.

The mixture of reactants and catalyst is typically heated at a temperature of from about 50 to 200 °C. for a period of time sufficient to achieve a substantially complete reaction, as indicated by the amount of by-product alcohol collected. This time period is usually from 1 to about 5 hours.

If there is a likelihood that the ethylenically unsaturated organic compound(s) used to prepare ingredient A will polymerize at the temperatures used to react them with the organosilicon compound, it may be desirable to include in the reaction mixture an effective amount of a free radical scavenger such as hydroquinone to completely suppress or at least inhibit this polymerization.

Those embodiments of ingredient A having boiling points below about 200 °C. under ambient or reduced pressure can be isolated by distilling the ingredient from the reaction mixture. Higher boiling products can be isolated using known chromatographic techniques with gases or liquids as the carrier.

If ingredient A is prepared in the absence of a solvent, the reaction mixture containing this ingredient can be combined with the other ingredients of the present primer compositions without isolation or purification.

In some instances it may be desirable to include in the reaction mixture used to prepare ingredient A a liquid diluent that may also function as a solvent for the reactants. Suitable diluents include aliphatic and aromatic hydrocarbons that are liquid at ambient temperature and boil within the range of from 50 to about 250 °C. Representative diluents include hexane, heptane and liquid aromatic hydrocarbons such as benzene, toluene and xylene. It should be understood that at least a portion of these diluents may have to be removed before the reaction product is combined with the other ingredients of the primer composition.

The present compositions also include a silicone/organic copolymer referred to hereinafter as ingredient B. This ingredient is required to achieve cohesive bonding between organosiloxane elastomers and amorphous or "glassy" polymers such as polymerized esters of acrylic or methacrylic acid, polycarbonates and polystyrene.

Ingredient B is prepared by reacting 1) at least one ester of an ethylenically unsaturated aliphatic carboxylic acid such as methacrylic or acrylic acid, and 2) a silane of the general formula $R^7COOR^6SiX_3$. In these formulae $R^6$ represents an alkylene radical, $R^7$ represents a terminally unsaturated alkenyl radical and X represents a hydrolyzable group. Preferably, $R^6$ contains from 1 to 4 carbon atoms and $R^7$ is $CH_2=CH-$ or $CH_2=C(CH_3)-$. Typical hydrolyzable groups represented by X include halogen atoms and lower alkoxy groups such as methoxy or ethoxy.

Copolymers corresponding to ingredient B of the present compositions are disclosed in U.S. Patent No. 3,306,800 that issued to E. Plueddemann on February 26, 1967 as a teaching of silicone/organic copolymers suitable for use in the primer compositions of this invention.

A particularly preferred class of copolymers is derived from methyl methacrylate and 3-methacryloxypropyltrimethoxysilane. The methyl methacrylate constitutes from 5 to about 95 weight percent of the monomer mixture, preferably from 80 to 95 weight percent.

The present compositions include an organohydrogensiloxane as a crosslinking agent for ingredients A and B. Suitable organohydrogensiloxanes contain an average of at least three silicon-bonded hydrogen atoms per molecule. The crosslinking agent can be either a homopolymer or a copolymer containing organohydrogensiloxane, diorganosiloxane and optionally mono- and/or triorganosiloxane units. The organic groups bonded to silicon are hydrocarbon radicals or substituted hydrocarbon radicals. To ensure compatibility between the organohydrogensiloxane and the other organosilicon ingredients of the primer composition it is preferable that the silicon-bonded hydrocarbon radicals in all of the organosilicon ingredients be selected from the same class, i.e. alkyl, substituted alkyl or aryl. In preferred embodiments of the present

primer compositions all of these hydrocarbon radicals are identical. Most preferably they are all methyl.

The solvent portion of the present primer compositions can be any volatile organic liquid that will dissolve all of the ingredients of the primer composition. The volatility of the solvent should be sufficient to allow a coating of the primer composition to become dry to the touch in several minutes under ambient conditions.

It has been found that the ability of the primer composition to wet the surface of organic polymers such as polymethyl methacrylate is substantially improved when the composition contains at least 50 percent by weight of an ethylenically unsaturated aliphatic alcohol containing 4, 5 or 6 carbon atoms or a mixture containing two or more of these alcohols. The hydroxyl group of the alcohol can be bonded to a primary, secondary or tertiary carbon atom and the location of the ethylenic double bond in the molecule is not critical.

The choice of a particular ethylenically unsaturated alcohol is limited only by its availability and cost, so long as it contains from 4 to 6 carbon atoms. Suitable alcohols include but are not limited to primary alcohols such as 3-buten-1-ol, 2-buten-1-ol (crotyl alcohol) and 3-methyl-2-buten-1-ol, secondary alcohols such as 3-buten-2-ol, 1-penten-3-ol and 3-penten-2-ol and tertiary alcohols such as 2-methyl-3-buten-2-ol and 3-methyl-1-penten-3-ol.

When the ethylenically unsaturated alcohols are present they should constitute at least about 50 percent by weight, preferably at least 90 percent by weight, of the solvent which in turn constitutes from about 50 up to about 95 percent by weight of the primer composition. Any remaining solvents should be miscible with these unsaturated alcohols and not react with or precipitate any ingredients of the primer composition. When other solvents are present, these are preferably one or more of the mono- and diethers of ethylene and propylene glycol.

The optimum solids content for a given primer composition is a function of several variables, including the thickness of the coating to be applied on the substrate and the method to be used to apply this coating. Typical application methods including brushing, wiping and spraying.

The extent to which one of the primer compositions of this invention will promote adhesion between an organosiloxane elastomer and an amorphous polymer substrate appears directly related to the number of carbon atoms present in the ethylenically unsaturated alcohol that is preferably present in the solvent. It appears that the strength of the cohesive bond between the elastomer and the substrate is maximized when the alcohol contains 4 or 5 carbon atoms and decreases when the number of carbon atoms in the alcohol is increased to 6.

In addition to the materials identified as ingredients A and 8, the organohydrogensiloxane, the organic peroxide and the solvent the present compositions may include optional ingredients such as a catalyst for the hydrolysis/condensation reaction that occurs when a liquid film prepared by applying the primer composition to a substrate is exposed to ambient moisture.

A variety of acidic and basic catalysts can be present as promoters for the reaction of alkoxy groups with atmospheric moisture. These catalysts include but are not limited to acids such as acetic acid, inorganic tin compounds such as stannous octoate, organic titanates such as tetrabutyl titanate and titanates derived from a mixture of an alcohol and a chelate-forming carboxylic acid such as acetoacetic acid.

If the catalyst used to prepare ingredient A is not removed before this ingredient is blended with the other ingredients of the present primer compositions, this amount of catalyst is often sufficient to promote hydrolysis of the alkoxy groups of the primer composition in the presence of atmospheric moisture.

The improved primer compositions of this invention are particularly useful for bonding organosiloxane elastomers to amorphous organic polymers or to inorganic substrates such as glass.

Organosiloxane compositions that cure by a variety of means at ambient temperature or by heating to yield elastomers are well known. Room temperature curable compositions typically cure in the presence of moisture or by a hydrosilation reaction in the presence of metals from the platinum group of the periodic table or compounds of these metals.

Moisture-curable polyorganosiloxane compositions contain a hydroxyl terminated polydiorganosiloxane with an average of 50 or more repeating units per molecule and a crosslinking agent that is usually a silane containing at least three silicon-bonded alkoxy or other hydrolyzable groups per molecule. A catalyst such as a compound of tin or titanium can be present to accelerate the curing reaction. Two-part moisture-curable compositions typically contain the same ingredients as one-part compositions, with the hydroxyl terminated polydiorganosiloxane and crosslinking agent in a first part and a tin-containing catalyst in a second part, optionally in combination with additional polydiorganosiloxane. The first part of the two-part compositions also contains water to accelerate the curing reaction.

Compositions that cure by a platinum-catalyzed hydrosilation reaction typically contain a liquid or a solubilized solid polydiorganosiloxane having an average of at least two ethylenically unsaturated radicals

such as vinyl per molecule, an organohydrogensiloxane containing at least three silicon-bonded hydrogen atoms per molecule as the curing agent and a relatively small concentration of platinum or a platinum compound as the curing catalyst. This catalyst will also catalyze the reaction of any unreacted organohydrogensiloxane in the primer composition with the ethylenically unsaturated radicals such as vinyl that are present in the curable organosiloxane composition or in the primer.

The curing rate of platinum-catalyzed compositions under ambient conditions is substantially reduced by including one of the known platinum catalyst inhibitors. One such class of inhibitors include the acetylenic alcohols such as 2-methyl-3-butyn-2-ol and ethynylcyclohexane. These inhibitors are inactivated or volatilized when the curable composition is heated, allowing rapid curing.

A second type of heat-curable composition comprises a gum type polydiorganosiloxane and an organic peroxide. The silicon-bonded hydrocarbon radicals present in the polydiorganosiloxane can include vinyl or other ethylenically unsaturated hydrocarbon radical.

It has been found that the presence of hydroxyl groups in the polydiorganosiloxane can improve the adhesion achieved between the cured form of many of the organosiloxane elastomer compositions described in the preceding paragraphs and the primer compositions of this invention.

The curable organosiloxane elastomer composition can contain various additives and modifiers, including but not limited to reinforcing and non-reinforcing fillers, pigments and flame retardants. Organosiloxane compositions containing these optional additives are sufficiently described in the literature that a detailed discussion of these compositions in this specification is not required.

In a typical procedure for preparing laminates useful as windows and windshields, one of the present primer compositions is applied as a thin continuous film to one surface of two substantially planar, optically clear amorphous organic polymer substrates, such as sheets formed from a polycarbonate or polymethyl methacrylate and allowed to dry under ambient conditions. A layer of an optically clear, curable organosiloxane elastomer composition is then placed between the two substrates and in contact with the two primed surfaces. The resultant composite is heated to cure the elastomer. To promote cohesive bonding between the various layers of the laminate, curing of the elastomer is preferably conducted while the laminate is under pressure in a hydraulic press or other suitable device. The cure temperature for the elastomer is typically from 100 to about 200 °C.

The following example describes a preferred embodiment of the present primer compositions and laminates prepared using this composition. The example should not be interpreted as limiting the scope of the invention described in the accompanying claims. Unless otherwise indicated in the examples all parts and percentages are by weight.

Primer compositions were prepared by blending the following ingredients to homogeneity.

2 parts of the product obtained by reacting equimolar amounts of 1,2-bis(trimethoxysilyl)ethane and the diallyl ether of trimethylolpropane in the presence of 1% by weight of tetrabutyl titanate, (ingredient A);

Ingredient A was prepared by heating the mixture of reactants and catalyst to the boiling point with stirring. The methanol produced as a by-product of the reaction was continuously removed from the reaction mixture by distillation and collected. Heating of the reaction mixture was continued until the amount of alcohol equivalent to a substantially complete reaction had been collected. The final temperature of the reaction mixture was 160 °C.

10 parts of a 20 percent by weight solution in ethyl acetate of a methyl methacrylate/3-methacryloxypropyltrimethoxysilane copolymer, (ingredient B);

Ingredient B was prepared by reacting methyl methacrylate and 3-methacryloxypropyltrimethoxysilane in a molar ratio of 10:1, respectively, in the presence of 1 percent, based on total monomers, of 3-mercaptopropyltrimethoxysilane and a catalytic amount of benzoyl peroxide using ethyl acetate as the polymerization medium.

1 part of a trimethylsiloxy terminated polymethylhydrogensiloxane exhibiting a viscosity of 0.13 Pa•s, (ingredient C); and

87 parts of 3-methyl-1-butene-3-ol.

The resultant mixture (90 parts) was blended with 10 parts of t-butylperoxyisopropyl carbonate to form a primer composition of this invention.

A second composition, referred to hereinafter as 1(C), contained the same types and amounts of ingredients as 1, with the exception that I(C) did not contain any peroxide and was used as a control.

Test samples were prepared as follows. Each of the two primer compositions, 1 and 1(C), was applied individually on to one surface of a glass plate, a sheet of optically clear polycarbonate available as Tuffak A® from the Rohm & Haas Company or a sheet of cast polymethyl methacrylate available as Plexiglass® from the Rohm & Haas Company. The primer compositions were applied to these three substrates by wiping one surface of each substrate with a piece of cheese cloth that had been soaked in the primer

composition. The dimensions of the substrates were 3.8 x 15.2 x 0.6 cm.

Prior to application of the primer all of the substrates were immersed in hexane while being wiped using a piece of cheese cloth. After being wiped dry the substrates were washed with methanol and then wiped dry, at which time the primer composition was applied. The thickness of the primer layer was about 2000 angstroms.

The primer layer was dried by exposing it to ambient conditions for one hour. Each primer was evaluated on two samples of each substrate. Laminates were prepared by placing each set of two samples, primed side up, on a flat metal plate that had been covered with a sheet of polytetrafluoroethylene. A 3 cm-wide strip of polytetrafluoroethylene was placed across one end of each sample to create an adhesion-free area. A 1.3 mm-thick calendared film of optically clear curable elastomer was then placed over both samples, followed by a sheet of stainless steel 30 mesh screening.

The screening had been previously washed with toluene, rinsed with acetone, dried and then wiped with a piece of cheesecloth that had been saturated with the same primer composition that had been applied to the substrate. After drying for one hour under ambient conditions the sheet of primed screening was placed on the elastomer film so as to cover both of the primed substrates.

The screening was then covered with a calendared curable elastomer film identical in composition to the one previously applied over the substrate, followed by a second sheet of polytetrafluoroethylene and a second metal plate. The resultant composites were cured by placing them in a hydraulic press and heating for 2 hours at a temperature of 100 °C. under a pressure of 200 psig (1.4 MPa). After cooling the cured composites were separated from one another. Prior to being evaluated a 6 mm-wide strip of screening and calendared film was trimmed from each of the two 15.2 cm-long sides of each composite to leave a 2.5 cm-wide strip of laminate adhered to the substrate.

The films of optically clear elastomer composition were curable by a platinum catalyzed hydrosilation reaction and consisted of the following ingredients:

98.5 percent of a homogeneous blend containing

55 parts of a dimethylvinylsiloxy terminated polydimethylsiloxane containing 0.1 mole percent of methylvinylsiloxane units and exhibiting a Williams plasticity number of 40;

10 parts of a hydroxyl terminated polydimethylsiloxane exhibiting a Williams plasticity number of 40; and

35 parts of a silica filler described in U.S. Patent No. 4,344,800, which issued to M. Lutz on August 17, 1982;

0.06 percent of ethynylcyclohexane as a platinum catalyst inhibitor;

0.2 percent of cyclic methylvinylsiloxanes;

0.3 percent of 3-methacryloxypropyltrimethoxysilane;

0.8 percent of a trimethylsiloxy terminated polydiorganosiloxane having an average of five methylhydrogensiloxane units and three dimethylsiloxane units per molecule and containing from 0.7 to 0.8 weight percent of silicon-bonded hydrogen atoms; and

0.09 percent of a reaction product of hexachloroplatinic acid and sym-tetramethyldivinyldisiloxane that has been diluted with a liquid dimethylvinylsiloxy terminated polydimethylsiloxane in an amount sufficient to achieve a platinum content of 0.7 weight percent.

The degree to which the cured elastomer adhered to the polycarbonate substrate was evaluated by subjecting the cured samples to the adhesion test described in ASTM Test Procedure No. D-903.

The force required to peel the elastomer from the substrate was measured under ambient conditions using a load cell associated with the device exerting this force. The force values are recorded in Table 1.

**TABLE 1**

| Temperature (°C.) | Peel Strength (pli/kilonewtons per meter) Substrate: Glass 1C | Glass 1 | Acrylic 1C | Acrylic 1 | Polycarbonate 1C | Polycarbonate 1 |
|---|---|---|---|---|---|---|
| -50 | 155/27 | 155/27 | 155/27 | 155/27 | 150/26 | 150/26 |
| 22 | 122/21 | 124/22 | 109/19 | 120/21 | 105/18 | 115/20 |
| 70 | 70/12 | 83/15 | ND | ND | ND | ND |
| 100 | 67/12 | 70/12 | 67/12 | 80/14 | 67/12 | 80/14 |
| 125 | ND | ND | 47/8 | 60/10 | 57/10 | 65/11 |
| 150 | 57/10 | 62/11 | ND | ND | 46/8 | 55/10 |
| 200 | 58/10 | 55/10 | ND | ND | ND | ND |
| 250 | 25/4* | 25/4* | ND | ND | ND | ND |

ND = Not Determined

* = Samples exhibited 50% cohesive failure (50% of exposed substrate surface contained adhering cured optically transparent elastomer)

## Claims

**1.** In a primer composition comprising

A. an organosilicon compound of the formula $(R^1O)_n(R^2O)_{(3-n)}SiR^3Si(OR^1)_r(OR^2)_{(3-r)}$, where R1 repre-

sents $CH_2=CHR^4OR^5$-; $R^2$ represents an alkyl radical containing from 1 to 4 carbon atoms; $R^3$ represents an alkylene radical containing at least 2 carbon atoms; $R^4$ represents an alkylene radical; $R^5$ represents an alkylene or substituted alkylene radical, where $R^5$ contains at least two carbon atoms and the substituent is a hydroxy, alkoxy or $CH_2=CHR^4O$- group, n is 1 or 2 and r is 0 or 1;

B. a copolymer derived from 1) at least one ester of an ethylenically unsaturated aliphatic carboxylic acid and 2) at least one silane of the formula $R^7COOR^6SiX_3$ where $R^6$ represents an alkylene radical, $R^7$ represents a terminally unsaturated alkenyl radical and X represents a hydrolyzable group;

C. an organohydrogensiloxane containing an average of at least two silicon-bonded hydrogen atoms per molecule; and

D. an amount of solvent sufficient to dissolve said composition;

the improvement comprising the presence in said composition of

E. an amount of an organic peroxide sufficient to retain the cohesive bonding properties of said composition at temperatures of at least 100 °C.

2. A composition according to claim 1 where, said organic peroxide E exhibits a half life of at least 30 minutes at 100 °C. said solvent D contains at least 50 percent by weight of an ethylenically unsaturated alcohol containing 4, 5 or 6 carbon atoms or a mixture of said alcohols, in ingredient A, $R^2$ is methyl, $R^3$ is ethylene, $R^4$ is methylene, $R^5$ is ethylene, propylene, 1,1-butylene or

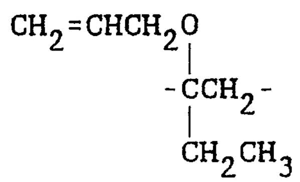 ;

in ingredient B, $R^6$ is propylene, $R^7$ is $CH_2=CH$ or $CH_2=C(CH_3)$-, X is methoxy or ethoxy and said ester of an ethylenically unsaturated carboxylic acid is methyl methacrylate and the organohydrogensiloxane C is a polymethylhydrogensiloxane.

3. A composition according to claim 2 where the peroxide E is selected from the group consisting of t-butylperoxyisopropyl carbonate, benzoyl peroxide, 2,4-dichlorobenzoyl peroxide, di-t-butyl peroxide, dicumyl peroxide, 2,5-bis(t-butylperoxy-2,5-dimethylhexane) and 1,1-di(t-butylperoxy)-3,3,5-trimethylcyclohexane, the concentration of peroxide is from 1 to 10 percent, based on the weight of said composition and alcohol portion of said solvent D is crotyl alcohol, 2-methyl-3-buten-2-ol or 3-methyl-1-penten-3-ol.

4. A composition according to claim 3 where said alcohol contains 4 or 5 carbon atoms and said peroxide E is t-butylperoxyisopropyl carbonate.